Europäisches Patentamt

European Patent Office

Office européen des brevets

(11) Veröffentlichungsnummer : **0 040 765**
**B1**

(19)

(12) # EUROPÄISCHE PATENTSCHRIFT

(45) Veröffentlichungstag der Patentschrift :
13.03.85

(21) Anmeldenummer : 81103720.9

(22) Anmeldetag : 14.05.81

(51) Int. Cl.⁴ : **H 02 H   7/16**, H 02 H   3/36,
H 02 H   3/44

(54) Überwachungseinrichtung für eine Kondensatorbatterie an einem Wechselspannungsnetz.

(30) Priorität : 27.05.80 DE 3020128

(43) Veröffentlichungstag der Anmeldung :
02.12.81 Patentblatt 81/48

(45) Bekanntmachung des Hinweises auf die Patenterteilung : 13.03.85 Patentblatt 85/11

(84) Benannte Vertragsstaaten :
BE CH DE FR GB LI NL SE

(56) Entgegenhaltungen :
DE-A- 2 264 064
FR-A- 1 402 917
FR-A- 1 403 148
GB-A- 1 189 246
US-A- 4 219 856

(73) Patentinhaber : **Siemens Aktiengesellschaft**
**Berlin und München Wittelsbacherplatz 2**
**D-8000 München 2 (DE)**

(72) Erfinder : **Renz, Klaus, Dipl.-Ing.**
**Heinrich-Heine-Strasse 15**
**D-8510 Fürth (DE)**

EP 0 040 765 B1

**Beschreibung**

Die Erfindung betrifft eine Überwachungseinrichtung für eine Kondensatorbatterie an einem Wechselspannungsnetz, die aus einer Anzahl von parallelen Strängen mit jeweils einer Anzahl von in Reihe geschalteten und miteinander mittels durchgehender Querleitungen verbundener Teilkondensatoren mit Sicherungen besteht, wobei unter Erfassung von Strom und Spannung der Kondensatorbatterie ein Vergleich ihres betrieblichen Verhaltens mit dem Verhalten einer modellmäßigen Nachbildung der Kondensatorbatterie unter Elimination des Einflusses der Netzoberschwingungen erfolgt. Eine derartige Überwachungseinrichtung ist nach der FR-A-1 403 148 bekannt.

Bei einer Kondensatorbatterie mit einer großen Anzahl von parallelen Strängen bzw. einer großen Anzahl von in Reihe geschalteten Teilkondensatoren ändert sich bei Ausfall eines Teilkondensators der Strom der Kondensatorbatterie nur in sehr geringem Maße, wobei noch erschwerend hinzukommt, daß bei einer solchen Kondensatorbatterie die durch Temperatureinflüsse verursachten Stromänderungen größer sein können als die Stromänderungen, die durch den Ausfall eines oder mehrerer Teilkondensatoren verursacht werden. Für solche Anwendungsfälle erweist sich daher die bekannte Überwachungseinrichtung als nicht zuverlässig genug.

Der Erfindung liegt die Aufgabe zugrunde, eine Überwachungseinrichtung für eine Kondensatorbatterie der eingangs genannten Art zu schaffen, die meßtechnisch einfach ausführbar ist und den Ausfall eines oder mehrerer Teilkondensatoren zuverlässig anzeigt. Diese Aufgabe wird erfindungsgemäß durch die im kennzeichnenden Teil des Anspruchs angegebenen Merkmale gelöst.

Der entscheidende Vorteil gegenüber der bekannten Überwachungseinrichtung ergibt sich bei der erfindungsgemäßen Überwachungseinrichtung durch den transienten Vergleich zwischen dem nachgebildeten und dem gemessenen Grundschwingungsstromes. Unter einem transienten Vergleich wird verstanden, daß nur schnelle Änderungen zwischen den nachgebildeten und der gemessenen Kondensatorspannung als Fehlersignal ausgewertet werden, während allmählich auftretende Änderungen nicht zu einer Fehlermeldung führen.

Es wird noch darauf verwiesen, daß nach der EP-A-0 040 768 beansprucht ist, bei Drehstrom-LC-Filterkreisen den Unterschied zwischen gemessenem und nachgebildetem Filterstrangstrom transient auszuwerten und nach der EP-A-0 040 766 beansprucht ist, bei Drehstrom-LC-Filterkreisen in Sternschaltung Änderungen von Betrag und Phasenlage des vom Sternpunkt zur Erde abfließenden Nullstromes transient auszuwerten.

Eine erfindungsgemäße Überwachungseinrichtung kann für einphasige und dreiphasige Kondensatorbatterien eingesetzt werden.

Ausführungsbeispiele der Erfindung sind in den Zeichnungen dargestellt und werden im folgenden näher beschrieben. Zum einfacheren Verständnis werden alle Spannungen in der informationsverarbeitenden Elektronik mit den physikalischen Größen bezeichnet, die sie abbilden.

Es zeigen :

Figur 1 eine schematische Darstellung einer Kondensatorbatterie,

Figur 2 ein Ersatzschaltbild einer Kondensatorbatterie,

Figur 3 den Aufbau einer erfindungsgemäßen Überwachungseinrichtung,

Figur 4 den Aufbau einer elektronischen Nachbildung einer Kondensatorbatterie,

Figur 5 ein Ausführungsbeispiel eines Siebkreises,

Figur 6 ein weiteres Ausführungsbeispiel eines Siebkreises,

Figur 7 ein Schaltbild einer ersten Ausführungsform einer transienten Vergleichseinrichtung,

Figur 8 ein weiteres Ausführungsbeispiel einer transienten Vergleichseinrichtung,

Figur 9 ein Ausführungsbeispiel eines Zeitgliedes,

Figur 10 ein Ausführungsbeispiel eines Melde- und Auslösekreises.

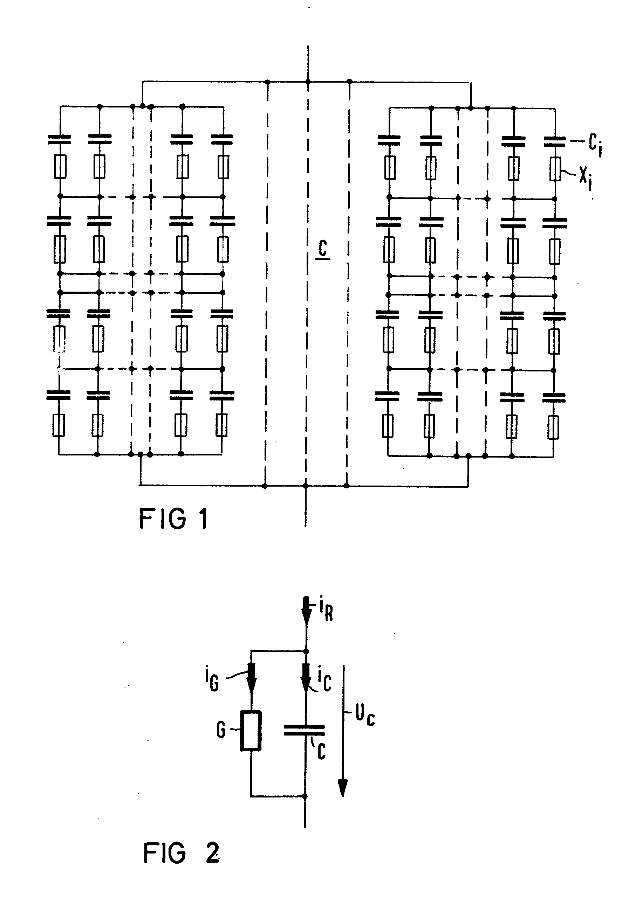

Fig. 1 zeigt eine schematische Darstellung einer Kondensatorbatterie C, die aus einer Anzahl von parallelen Strängen mit jeweils einer Anzahl von in Reihe geschalteten Teilkondensatoren $C_i$ mit Sicherungen $X_i$ besteht, wobei benachbarte Teilkondensatoren mit durchgehenden Querleitungen verbunden sind. Eine derartige Kondensatorbatterie kann mehr als 100 Teilkondensatoren enthalten.

Fig. 2 zeigt ein Ersatzschaltbild einer derartigen Kondensatorbatterie mit der Kapazität C und dem Gleichstromleitwert G. An der Kondensatorbatterie liegt die Spannung $u_c$ an. Der in die Kondensatorbatterie fließende Strom $i_R$ teilt sich in den Strom $i_c$ durch die Kapazität C und in den Strom $i_G$ durch den Gleichstromleitwert G auf.

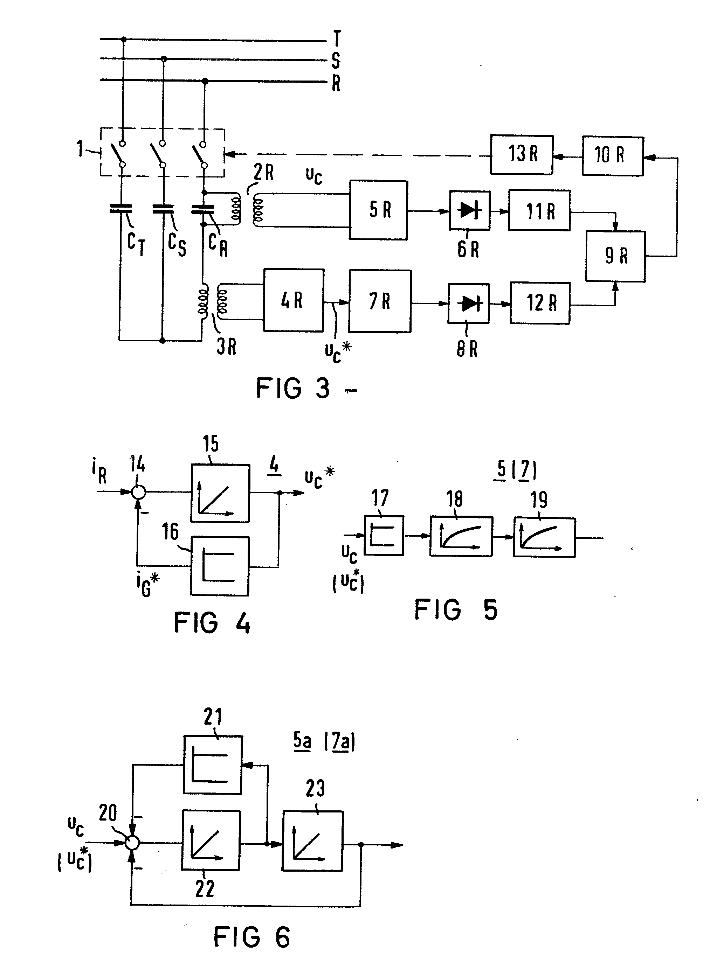

Fig. 3 zeigt eine schematische Darstellung einer erfindungsgemäßen Überwachungseinrichtung für eine Kondensatorbank an einem Drehstromnetz. Die Kondensatorbank enthält die Kondensatorbatterien $C_R$, $C_S$, $C_T$, die über eine Schalteinrichtung 1 an die Phasen RST des Drehstromnetzes angeschlossen sind. Die Kondensatorbatterien sind mit den Belägen zusammengeschaltet, die nicht mit dem Drehstromnetz verbunden sind.

Im einzelnen ist nur die Überwachungseinrichtung für die Kondensatorbatterie $C_R$ dargestellt, wobei die Elemente jeweils mit einem Index R bezeichnet sind. Für die anderen Kondensatorbatterien $C_S$ und $C_T$ sind gleichartig aufgebaute Überwachungseinrichtungen vorgesehen.

Die erfindungsgemäße Überwachungseinrichtung ist auch für eine einphasige Kondensatorbatterie an einem Wechselspannungsnetz geeignet. Bei einem derartigen Anwendungsfall wird derjenige Belag der Kondensatorbatterie geerdet, der nicht mit dem Wechselspannungsnetz verbunden ist.

Die Spannung an der Kondensatorbatterie $C_R$ wird von einem potentialtrennenden Spannungsmeßwandler 2 R erfaßt. An der Bürde des Spannungsmeßwandlers 2 R fällt eine Meßspannung auf dem Spannungsniveau der Signalverarbeitung ab, die der jeweiligen Phasenspannung proportional ist. Dem potentialtrennenden Spannungsmeßwandler 2 R kann ein Entkopplungsglied nachgeschaltet sein, um den Wandlerkreis von der nachfolgenden signalverarbeitenden Elektronik zu trennen. Durch eine derartige Trennung des Hochspannungspotentials vom Elektronikpotential können Störungen in der Anlage nicht in die Elektronik übergekoppelt werden.

Der Phasenstrom $i_R$ wird mit einem potentialtrennenden Strommeßwandler 3 R erfaßt. Dem Strommeßwandler 3 R kann wiederum ein nicht dargestelltes Entkopplungsglied nachgeschaltet sein. Der gemessene Phasenstrom wird einer elektronischen Filternachbildung 4 R zugeführt, die eine nachgebildete Kondensatorspannung $u^*_c$ ermittelt. Aufbau und Wirkungsweise einer derartigen elektronischen Kondensatornachbildung wird anhand von Fig. 4 näher beschrieben. Die nachgebildete Kondensatorspannung $u^*_c$ wird einem Siebkreis 7 R zugeführt, der durch Unterdrückung von Oberschwingungen die Grundschwingung herausfiltert. Der Aufbau geeigneter Siebkreise wird anhand der Figuren 5 und 6 näher erläutert. Die Grundschwingung der nachgebildeten Kondensatorspannung wird in einem Betragsbildner 8 R gleichgerichtet und in einem Glättungsglied 12 R in eine Gleichspannung umgeformt, die der Amplitude der Grundschwingung der nachgebildeten Kondensatorspannung $u^*_c$ proportional ist.

Die vom Spannungsmeßwandler 2 R erfaßte Kondensatorspannung wird einem Siebkreis 5 R zugeführt, der den gleichen Schaltungsaufbau aufweist wie der Siebkreis 7 R (siehe Fig. 5 bzw. Fig. 6). Die Ausgangsspannung des Siebkreises 5 R, die der Grundschwingung der gemessenen Kondensatorspannung entspricht, wird in einem Betragsbildner 6 R gleichgerichtet und in einem Glättungsglied 11 R in eine Gleichspannung umgeformt, die der Amplitude der Grundschwingung der gemessenen Kondensatorspannung proportional ist.

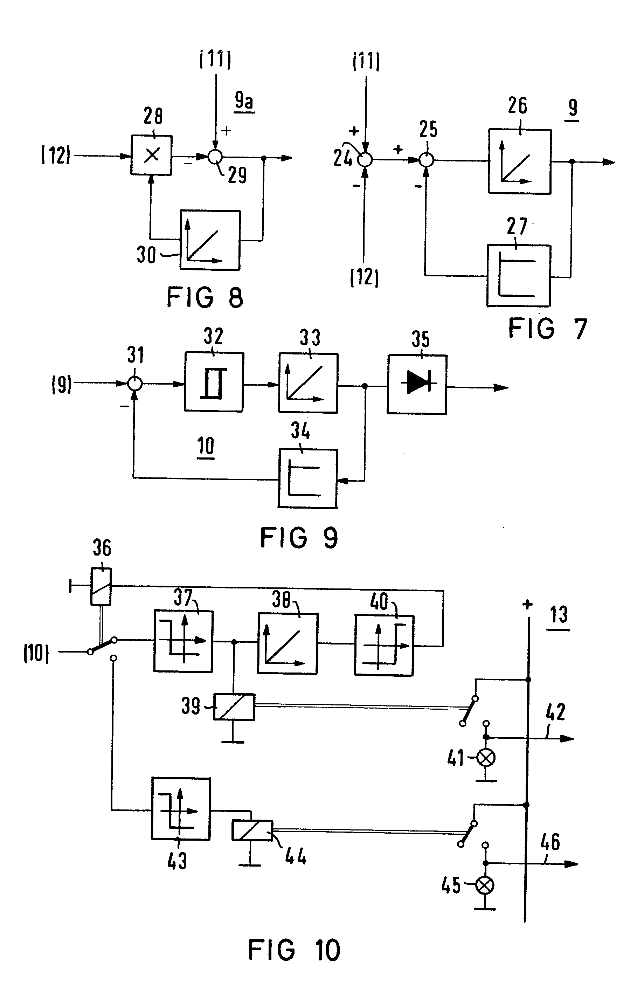

In der transienten Vergleichseinrichtung 9 R wird die Grundschwingung der gemessenen Kondensatorspannung mit der Grundschwingung der nachgebildeten Kondensatorspannung verglichen. Ausführungsformen entsprechender Vergleichseinrichtungen sind in den Figuren 7 und 8 dargestellt. Die Vergleichseinrichtung 9 R gibt nur dann ein entsprechendes Ausgangssignal ab, wenn plötzlich eine Differenz zwischen der gemessenen Kondensatorspannung und der nachgebildeten Kondensatorspannung auftritt. Derartige plötzliche Änderungen deuten auf das Schmelzen einer Sicherung der Kondensatorbatterie und damit auf den Defekt eines oder mehrerer Teilkondensatoren hin. Andererseits führen langsame Änderungen in der Kapazität der Kondensatorbatterie, die insbesondere durch Temperaturgang hervorgerufen werden, nicht zu einem entsprechenden Ausgangssignal.

Das Ausgangssignal der Vergleichseinrichtung 9 R wird einer Zeitstufe 10 R zugeführt, die ihrerseits nur dann anspricht, wenn das Ausgangssignal der Vergleichseinrichtung 9 R eine gewisse Zeit vorliegt. Das Ausgangssignal der Zeitstufe 10 R wird einem Melde- und Auslösekreis 13 zugeführt, der einen Kondensatorfehler anzeigt bzw. bei einem entsprechend großen Kondensatorfehler die Kondensatorbank durch Betätigung der Schalteinrichtung 1 vom Drehstromnetz trennt. Eine Ausführungsform eines derartigen Melde- und Auslösekreises ist in Fig. 10 im einzelnen dargestellt.

Fig. 4 zeigt den Aufbau einer elektronischen Nachbildung 4 der Kondensatorbatterie, die unter Hinweis auf das in Fig. 2 dargestellte Ersatzschaltbild erläutert wird. Der eingangsseitig zugeführte Meßwert $i_R$ für den Kondensatorstrom wird in einem Vergleichsglied 14 mit dem nachgebildeten Strom $i^*_G$ durch den Gleichstromleitwert verglichen. Das Ausgangssignal des Differenzgliedes 14 wird einem Integrator 15 zugeführt, dessen Ausgangsspannung die nachgebildete Kondensatorspannung $u^*_c$ darstellt. Die nachgebildete Kondensatorspannung $u^*_c$ wird von einem Verstärker 16 mit einstellbarem Verstärkungsfaktor in Anwendung des ohmschen Gesetzes in den nachgebildeten Strom $i^*_G$ durch den Gleichstromleitwert umgeformt.

Fig. 5 zeigt ein Schaltungsbeispiel für einen Siebkreis 5 oder 7. Der Meßwert $u_c$ für die Kondensatorspannung wird über einen Anpaßverstärker 17 mit einstellbarer Verstärkung auf ein zweistufiges Siebglied mit den Tiefpässen 18 und 19 gegeben.

Fig. 6 zeigt einen anderen Schaltungsaufbau eines Siebkreises 5a bzw. 7a, der anstelle des Siebkreises 5 bzw. 7 eingesetzt werden kann. Der Siebkreis 5a ist als Resonanzfilter aufgebaut und enthält ein Summierglied 20, einen Integrator 22 mit einem Verstärker 21 in der Rückführung, sowie einen weiteren Integrator 23 in der dargestellten Schaltung. Die zu glättende Eingangsgröße, nämlich die gemessene Kondensatorspannung $u_c$ bzw. die nachgebildete Kondensatorspannung $u^*_c$, wird dem Summierglied 20 mit positivem Vorzeichen zugeführt. Dem Summierverstärker 20 wird mit negativem Vorzeichen das Ausgangssignal des Siebkreises 5a und ebenfalls mit negativem Vorzeichen das über den Verstärker 21 geführte Ausgangssignal des Integrators 22 zugeführt. Das Ausgangssignal des Summiergliedes 20 wird dem ersten Integrator 22 zugeführt, dessen Ausgangsspannung dem zweiten Integrator 23 zugeführt wird.

Fig. 7 zeigt ein Ausführungsbeispiel einer transienten Vergleichsschaltung 9. Die Ausgangsspannung des Glättungsgliedes 11, die die gleichgerichtete und geglättete Grundschwingung der gemessenen Kondensatorspannung darstellt, wird einem Vergleichsglied 24 zugeführt. Dem Vergleichsglied 24 wird mit entgegengesetztem Vorzeichen die Ausgangsspannung des Glättungsgliedes 12 zugeführt, welche die gleichgerichtete und geglättete Grundschwingung der nachgebildeten Kondensatorspannung darstellt. Das Vergleichsergebnis wird einer Differenziererschaltung zugeführt, die einen Integrator 26 mit einem eingangsseitigen Differenzglied 25, sowie einen Verstärker 27 in der Rückführung des Integrators 26 aufweist. Durch die Wirkung der Differenziererschaltung 25, 26, 27 führen nur plötzlich auftretende Ausgangsspannungen des Differenzgliedes 24 zu einem entsprechenden Ausgangssignal der transienten Vergleichsstufe 9. Langsam auftretende Ausgangsspannungen des Differenzgliedes 24 führen dagegen zu keinem Ausgangssignal.

Fig. 8 zeigt eine andere Ausführungsform einer transienten Vergleichseinrichtung, die bei starken Schwankungen der Spannung des Drehstromnetzes RST vorteilhaft ist. Die transiente Vergleichseinrichtung 9a ist als nichtlinearer Regelkreis ausgebildet und enthält einen Multiplizierer 28, ein Differenzglied 29 und einen Integrator 30. Die Ausgangsspannung des Glättungsgliedes 12, welche die gleichgerichtete und geglättete Grundschwingung der nachgebildeten Kondensatorspannung darstellt, wird dem einen Eingang des Multiplizierers 28 zugeführt, dessen Ausgangssignal einem Differenzglied 29 mit negativem Vorzeichen zugeführt wird. Dem Differenzglied 29 wird mit positivem Vorzeichen die Ausgangsspannung des Glättungsglieds 11 zugeführt, die der gleichgerichteten und geglätteten Grundschwingung der gemessenen Kondensatorspannung entspricht. Das Ausgangssignal des Glättungsgliedes 29 wird auf den Integrator 30 geführt, dessen Ausgangsspannung dem zweiten Eingang des Multiplizierers 28 zugeführt wird. Das Ausgangssignal des Differenzgliedes 29 stellt zugleich das Ausgangssignal der transienten Vergleichseinrichtung 9a dar. Besonders hervorzuheben ist, daß Schwankungen der Spannung des Drehstromnetzes nicht zu falschen Fehlersignalen führen, da sich bei Netzspannungsschwankungen sowohl die gemessene Kondensatorspannung wie auch die nachgebildete Kondensatorspannung gleichzeitig und in der gleichen Richtung ändern.

Fig. 9 zeigt den Aufbau eines Zeitgliedes 10. Die Ausgangsspannung der transienten Vergleichseinrichtung 9 wird einem Differenzglied 31 zugeführt. Die Ausgangsspannung des Differenzgliedes 31 wird auf einen Trigger 32 gegeben, der sein Ausgangssignal beim Wechsel der Polarität seiner Eingangsspannung ändert. Der Ausgang des Triggers 32 ist mit einem Integrator 33 verbunden, dessen Ausgangsspannung über einen Proportionalverstärker 34 auf das Differenzglied 31 rückgekoppelt ist. Bei einem Ausgangssignal der transienten Vergleichsschaltung 9 spricht der Trigger 32 an. Der Integrator 33 läuft hoch. Über den Verstärker 34 wird die Eingangsspannung des Triggers 32 verringert, bis dieser zurückfällt und ein Ausgangssignal mit entgegengesetzter Polarität erzeugt, das den Integrator 33 zurückstellt. Dies hat zur Folge, daß das Zeitglied 10 nach einer Ansprechverzögerung ein entsprechendes Ausgangssignal führt.

Wenn die Überwachungseinrichtung so ausgelegt ist, daß sie nur bei der Abtrennung eines Stranges der Kondensatorbatterie durch Schmelzen einer Sicherung ansprechen soll, so kann das Ausgangssignal des Zeitgliedes 10 unmittelbar dem Melde- und Auslösekreis 13 zugeführt werden. Wenn dagegen die erfindungsgemäße Überwachungseinrichtung zusätzlich auch bei einem Kurzschluß in der Kondensatorbatterie ansprechen soll, so wird dem Zeitglied 10 ein Gleichrichter 35 nachgeschaltet, da sich das Abtrennen eines Stranges der Kondensatorbatterie durch Schmelzen einer Sicherung in einer Stromerniedrigung und ein Kurzschluß in der Kondensatorbatterie in einer Stromerhöhung äußern.

Fig. 10 zeigt das Blockschaltbild eines Melde- und Auslösekreises 13. Das Ausgangssignal des Zeitgliedes 10 wird auf Zählstufen gegeben, die jeweils einen eingangsseitigen Grenzwertmelder 37 bzw. 43 aufweisen. Die eingangsseitigen Grenzwertmelder 37 und 43 sind so eingestellt, daß plötzliche Differenzen zwischen der gemessenen und der nachgebildeten Kondensatorspannung, die durch einen defekten Teilkondensator in der Kondensatorbatterie hervorgerufen werden, ein Ausgangssignal des betreffenden Grenzwertmelders ergeben. Die Ansprechschwellenwerte der Grenzwertmelder 37 und 43 sind auf gleiche Werte eingestellt.

Dem eingangsseitigen Grenzwertmelder 37 der ersten Zählstufe ist ein Integrator 38 nachgeschaltet, dessen Ausgangssignal auf einen weiteren Grenzwertmelder 40 geführt ist. Das Ausgangssignal des weiteren Grenzwertmelders 40 steuert ein Relais 36 im Eingang des eingangsseitigen Grenzwertmelders 37. Das Ausgangssignal des eingangsseitigen Grenzwertmelders 37 steuert ein Relais 39, bei dessen Betätigung eine Anzeigelampe 41 angesteuert wird. Parallel zur Anzeigelampe 41 kann über eine Leitung 42 ein Überwachungssignal abgegeben werden.

Bei der zweiten Zählstufe steuert der eingangsseitige Grenzwertmelder 43 ein Relais 44, das eine Anzeige 45 steuert, zu der parallel eine Leitung 46 angeschlossen ist, auf der wiederum ein Meldesignal abgegeben werden kann.

Die Wirkungsweise des Melde- und Auslösekreises 13 ist wie folgt:

Wenn durch einen Defekt eines Teilkondensators in der Kondensatorbatterie eine entsprechende Eingangsspannung über den Umschaltkontakt des Relais 36, der sich in der gezeichneten Stellung befindet, auf den eingangsseitigen Grenzwertmelder 37 der ersten Zählstufe gelangt, so spricht der Grenzwertmelder 37 an und betätigt das Relais 39. Durch Aufleuchten der Anzeige 41 wird ein erster defekter Teilkondensator in der Kondensatorbatterie $C_R$ angezeigt. Hat der Grenzwertmelder 37 angesprochen, so läuft der Integrator 38 hoch, bis seine Ausgangsspannung den Ansprechschwellenwert des weiteren Grenzwertmelders 40 erreicht. Das Ausgangssignal des weiteren Grenzwertmelders 40 steuert das Relais 36 um, so daß das Zeitglied 10 nunmehr mit der zweiten Zählstufe 43 bis 46 verbunden ist. Bei einem Defekt eines zweiten Teilkondensators wird — sofern die erste Zählstufe nicht quittiert wurde — die zweite Zählstufe 43 bis 46 angesteuert. Durch Aufleuchten der Anzeige 45 wird der zweite defekte Teilkondensator angezeigt.

Die Hochintegrationszeit des Integrators 38 in der ersten Zählstufe ist in der Größenordnung von einigen Sekunden eingestellt, während die Rückintegrationszeit erheblich weniger als 1 Sekunde beträgt. Die Hochintegrationszeit ist länger als die maximale Zeit, bis eine Sicherung bei einem durch einen defekten Teilkondensator verursachten Zeilenkurzschluß schmilzt. Die Rückintegrationszeit bestimmt, wie lange man einen — nicht dargestellten — Rückstellknopf drücken muß, um nach Beseitigung eines Kondensatorfehlers die anstehende Meldung zu quittieren. Durch Quittieren der entsprechenden Meldung werden die Relais 36 und 39 bzw. 44 wieder in die gezeichnete Lage umgesteuert.

Die Zählstufen des Melde- und Auslösekreises 13 ermöglichen folgende abgestufte Überwachungsstrategie :

Wird nur ein defekter Teilkondensator gemeldet, so kann die Kondensatorbatterie noch eine gewisse Zeit in Betrieb bleiben, die beispielsweise so bemessen ist, daß das Wartungspersonal herbeigerufen werden kann. Werden jedoch zwei defekte Teilkondensatoren gemeldet, so ist der Filterkreis sofort abzuschalten. Zur Ansteuerung der Schalteinrichtung 1 kann das Signal auf der Leitung 46 herangezogen werden.

Der dargestellte Melde- und Auslösekreis 13 kann auf weitere Zählstufen erweitert werden, wenn eine noch feiner abgestimmte Überwachungsstrategie erforderlich ist.

## Anspruch

Überwachungseinrichtung für eine Kondensatorbatterie ($C_R$) an einem Wechselspannungsnetz, die aus einer Anzahl von parallelen Strängen mit jeweils einer Anzahl von in Reihe geschalteten und miteinander mittels durchgehender Querleitungen verbundener Teilkondensatoren mit Sicherungen besteht, wobei unter Erfassung von Strom (3 R) und Spannung (2 R) der Kondensatorbatterie ein Vergleich ihres betrieblichen Verhaltens mit dem Verhalten einer modellmäßigen Nachbildung der Kondensatorbatterie unter Elimination des Einflusses der Netzoberschwingen erfolgt, gekennzeichnet durch eine elektronische Nachbildung (4 R) mit einem nachgeordneten Siebkreis (7 R) zur Ermittlung der Grundschwingung der aus dem gemessenen Kondensatorstrom nachgebildeten Kondensatorspannung und durch eine Vergleichsschaltung (9 R) mit differenzierender Wirkung (transiente Vergleichsschaltung) zum Vergleich der Grundschwingung der nachgebildeten Kondensatorspannung mit der mittels eines weiteren Siebkreises (R 5) erhaltenen Grundschwingung der gemessenen Kondensatorspannung, wobei die Vergleichsschaltung nur dann ein Ausgangssignal abgibt, wenn sprunghaft ein Unterschied zwischen gemessener und nachgebildeter Grundschwingung der Kondensatorspannung auftritt.

## Claim

Monitoring arrangement for a bank of capacitors ($C_R$) in an alternating current power supply, which bank comprises a plurality of parallel branches each with a plurality of series-connected component capacitors, with fuses, which are interconnected by means of continuous transverse lines, wherein by determining current (3 R) and voltage (2 R) of the bank of capacitors, comparison of its operational behaviour and the behaviour of a model simulation of the bank of capacitors takes place with elimination of the influence of the power harmonics, characterised by an electronic simulation (4 R) with a subsequently connected filter circuit (7 R) for determining the first harmonic of the capacitor voltage simulated from the measured capacitor current, and by a comparator circuit (9 R) with differential effect (transient comparator circuit) for comparing the first harmonic of the simulated capacitor voltage with the first harmonic of the measured capacitor voltage obtained by means of a further filter circuit (5 R), wherein the comparator circuit only emits an output signal when there is suddenly a difference between the measured and the simulated first harmonic of the capacitor voltage.

## Revendication

Dispositif de surveillance d'une batterie de condensateurs d'un réseau à tension alternative qui est constituée par un certain nombre de branches parallèles dont chacune comporte un certain nombre de condensateurs partiels, avec des fusibles, montés en série et reliés entre eux à l'aide de conducteurs transversaux continus, la réalisation étant telle que par la saisie du courant (3 R) et de la tension (2 R) de la batterie de condensateurs, on opère une comparaison entre leur comportement en fonctionnement et le comportement d'une simulation d'un modèle de la batterie de condensateurs, tout en éliminant l'influence des harmoniques du réseau, caractérisé par une simulation électronique (4 R) à circuit de filtrage aval (7 R) en vue de déterminer l'oscillation fondamentale de la tension de condensateur simulée à partir du courant de condensateur, et par un circuit-comparateur (9 R) à effet différentiateur (circuit-comparateur transitoire) pour comparer l'oscillation fondamentale de la tension de condensateur simulée avec une oscillation fondamentale de la tension de condensateur mesurée et obtenue à l'aide d'un second circuit de glissage (5 R), le circuit-comparateur ne fournissant un signal de sorte que s'il apparaît une différence brusque entre l'oscillation fondamentale mesurée et simulée de la tension de condensateur.

FIG 1

FIG 2

FIG 3 –

FIG 4

FIG 5

FIG 6

FIG 8

FIG 7

FIG 9

FIG 10